# EUROPEAN PATENT APPLICATION

(11) **EP 1 820 602 A2**
(43) Date of publication of application: **22.08.2007**
(21) Application number: 07250276.8
(22) Date of filing: 23.01.2007
(51) Int. Cl.: B23Q 5/28, B23H 7/26

(54) **Machine tool**

(30) Priority: 14.02.2006 JP 2006036995
(71) Applicant: FANUC LTD, Minamitsuru-gun, Yamanashi 401-0597 (JP)
(72) Inventor: Kita, Yuki, Minamitsuru-gun, Yamanashi 401-0511 (JP); Sakurai, Akihiro, Minamitsuru-gun, Yamanashi 401-0511 (JP)
(74) Representative: Billington, Lawrence Emlyn

(57) **Abstract**

A machine tool having movable axes driven by linear motors has a brake unit disposed in parallel with each linear motor. When the linear motors are not excited, the brake units are turned on to lock the movable axes. When the linear motors are excited, if a machining signal is off, indicating that machining is not in progress, and no manual command is issued, the brake units are likewise turned on to lock the movable axes. The brake units have a certain amount of play so that even when locked, a movable axis can move by a certain amount to enable the linear motor, if excited, to halt in a stable position, avoiding overcurrent flow.

## Description

### BACKGROUND OF THE INVENTION

### 1. Field of the Invention

This invention relates to a machine tool in which a movable axis is driven by a linear motor.

### 2. Description of the Related Art

Conventional wire electric discharge machines and other machine tools use rotary motors to drive their movable axes. In general, a conversion mechanism for converting rotary motion to linear motion, such as a ball screw/nut mechanism, is used to convert the revolution of a servo motor to linear motion to drive a movable axis.

Recently, machine tools that use linear motors to drive their feed axes have come into use.

For example, Japanese Patent Applications Laid-Opens Nos.61-226225, 63-2626, and 8-318433 disclose wire cut electric discharge machines that use a linear motor to drive a feed axis. Japanese Patent Application Laid-Open No.6-297286 discloses a machine tool that uses a linear motor to drive a feed axis. The above Japanese Patent Application Laid-Open No.6-297286 describes a machine tool with a brake unit that brakes and immobilizes a movable axis (slide) driven by linear motors when an emergency stop switch operates or a power failure occurs. Applying a brake to prevent motion of a movable axis during unexcited periods has been a widespread practice in electric discharge machines, as described in Japanese Patent Application Laid-Open No. 2000-225526.

When external force is applied to a movable axis from a source other than the motor that drives the movable axis, the motor may be overloaded by or moved by the external force. In a conventional machine tool in which a movable axis is driven by a rotary servo motor, a ball screw/nut mechanism or another conversion mechanism for converting rotary motion to linear motion is present between the movable axis and the motor, as described above. This conversion mechanism includes backlash and spring elements. Accordingly, even if external force is applied to the movable axis, the effects of the external force on the motor are reduced because the backlash and spring elements included in the conversion mechanism absorb the external force.

When a linear motor is used to drive a movable axis, although the axis can be fed faster and with quicker control response, because no ball screw/nut mechanism or other conversion mechanism is present, external force applied to the movable axis acts directly on the linear motor.

When a workpiece is placed on a table with a movable axis driven by a linear motor in a machine tool, a large external force may be applied to the table and thereby act directly on the linear motor.

In a wire electric discharge machine in particular, the force applied when a workpiece is placed on the machining table may exceed the force required to feed the axis when the workpiece is being machined.

Accordingly, if the linear motor is selected according to the force required for axis feed during actual machining, then when a large force is applied as described above while the linear motor is excited, the force may overload the linear motor or move the movable axis.

To prevent this, the linear motor and the amplifier that drives it must be selected with a view to anticipated external forces.

Linear motors and most other types of apparatus are most efficient, and easiest to control, when they operate near their specified ratings. If the linear motor and the amplifier that drives it are selected to deal with anticipated external forces, however, it is necessary to specify a linear motor and an amplifier for driving the linear motor that output more force than required for axis feed during actual machining.

### SUMMARY OF THE INVENTION

The present invention relates to a machine tool having a linear motor for driving a movable axis and a brake unit that operates to brake the movable axis when the linear motor is excited but machining is not in progress and the movable axis is stationary because no operation command is issued for the movable axis.

The brake unit may be installed with play so that the movable axis remains movable by a certain amount even when braked. The brake unit may operate by pushing a friction body against a shaft mounted in parallel with the movable axis and may include end mounts that hold respective ends of the shaft with the necessary amount of play.

The present invention is applicable to a wire electric discharge machine.

The present invention can prevent occurrence of failures which are estimated to occur in case where a linear motor and an amplifier for driving the linear motor, which are adapted to the force required for axis feed during actual machining, are selected.

In particular, according to the present invention, even when the linear motor is excited, if machining is not in progress and if the movable axis is not being driven, the movable axis is locked by the brake unit, so external forces cannot move the movable axis and safety is secured. In addition, since excessive force does not act on the linear motor that drives the movable axis, a linear motor having more than the necessary power is not required, a linear motor and amplifier that provide only the axis feed force required in machining are sufficient, and costs can be reduced. The brake unit is also installed with play, preventing excessive current flow in the linear motor if the movable axis is braked while the linear motor is excited.

### BRIEF DESCRIPTION OF THE DRAWINGS

The purposes and advantages of the present invention, including those described above, will be clarified with reference to the attached drawings in combination with the description of the embodiment presented below. Of these drawings:
FIG. 1 is a schematic view showing an embodiment of a wire electric discharge machine to which the present invention is applied.
FIG. 2 is a sectional view of section A-A in FIG. 1.
FIG. 3 is a block diagram showing principal parts of a controller that controls the wire electric discharge machine in FIG. 1.
FIG. 4 is a flowchart showing control processing performed by the CPU of the controller in FIG. 3.

### DETAILED DESCRIPTION OF THE PREFERRED EMBODIMENT

An embodiment of the present invention in which a wire electric discharge machine is used as a machine tool will be described below. In a wire electric discharge machine, large external forces are unlikely to be applied to the axis feed apparatus during machining, but are likely to be applied during preparations for machining, such as when placing a workpiece on the machining table. The present embodiment prevents a linear motor from being overloaded due to large external force generated during preparations for machining.

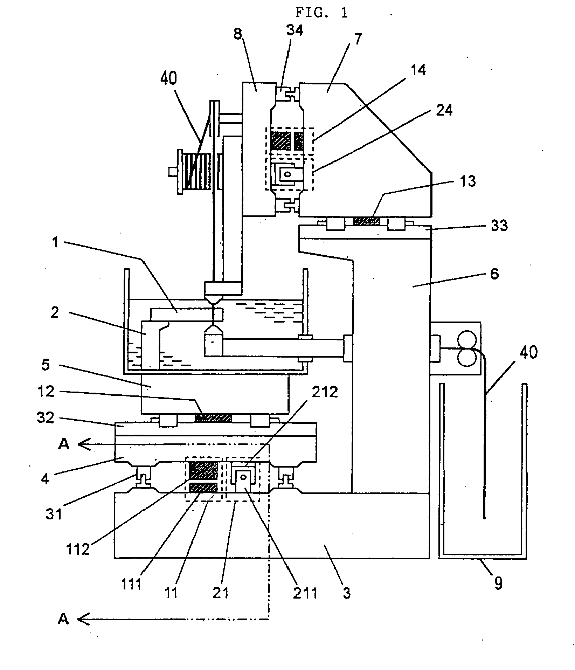

FIG. 1 is a schematic view of a wire electric discharge machine in the present embodiment.

A saddle 4 is mounted on linear motion guides 31 on the bed 3 of the wire electric discharge machine so as to be movable in the direction orthogonal to the surface of the drawing sheet of FIG. 1. The direction in which the saddle 4 moves will be referred to as X-axis direction and the saddle 4 may be referred to as X-axis movable axis. A table 5 is mounted on linear motion guides 32 on the saddle 4 so as to be movable in the left-right direction in FIG. 1. The direction in which the table 5 moves with respect to the saddle 4 will be referred to as Y-axis direction and the table 5 may be referred to as Y-axis movable axis.

A work stage 2 is disposed on the table 5. A workpiece 1 can be attached to the work stage 2. In FIG. 1, a work tank is mounted on the table 5, the work stage 2 is disposed in the work tank, and the workpiece 1 is immersed in a working fluid in the work tank.

A column 6 is attached vertically to the bed 3. At the upper end of the column 6, a UV saddle 7 is mounted on linear motion guides 33 so as to be movable in the left-right direction in FIG. 1. The direction in which the UV saddle 7 moves will be referred to as V-axis direction and the UV saddle 7 may be referred to as V-axis movable axis. A UV table 8 is mounted on linear motion guides 34 on the UV saddle 7 so as to be movable in the direction orthogonal to the surface of the drawing sheet in FIG. 1. The direction in which the UV table 8 moves will be referred to as U-axis direction and the UV table 8 may be referred to as U-axis movable axis. The UV table 8 has a wire electrode supply unit that supplies a wire 40 through a wire guide or the like to the part of the workpiece 1 that is being machined. The spent wire 40 is collected in a wire box 9.

An X-axis linear motor 11 that drives the saddle 4 in the X-axis direction is disposed between the bed 3 and the saddle 4, a Y-axis linear motor 12 that drives the table 5 in the Y-axis direction is disposed between the saddle 4 and the table 5, a V-axis linear motor 13 that drives the UV saddle 7 in the V-axis direction is disposed between the column 6 and the UV saddle 7, and a U-axis linear motor 14 that drives the UV table 8 in the U-axis direction is disposed between the UV saddle 7 and the UV table 8. An X-axis brake unit 21, a Y-axis brake unit 22, a V-axis brake unit 23, and a U-axis brake unit 24 are also provided. In FIG. 1, only the X-axis brake unit 21, disposed between the bed 3 and the saddle 4, and the U-axis brake unit 24, disposed between the UV saddle 7 and the UV table 8, are shown. The Y-axis brake unit 22 and V-axis brake unit 23 are not shown in FIG. 1.

Reference numeral 111 in FIG. 1 denotes a permanent magnet of the X-axis linear motor 11. The permanent magnet is fixed to the bed 3. Reference numeral 112 denotes an electromagnet of this linear motor 11. The electromagnet is fixed to the saddle 4. Similarly, in the other linear motors 12 to 14, a permanent magnet and an electromagnet are opposed to each other with a certain clearance left them, the permanent magnet being attached to one of the relatively moving members and the electromagnet being attached to the other member.

The X-axis, Y-axis, V-axis, and U-axis brake units 21 to 24 are disposed in parallel with the X-axis, Y-axis, V-axis, and U-axis linear motors 11 to 14, respectively, in order to brake the motion of the movable axes driven by the linear motors 11 to 14.

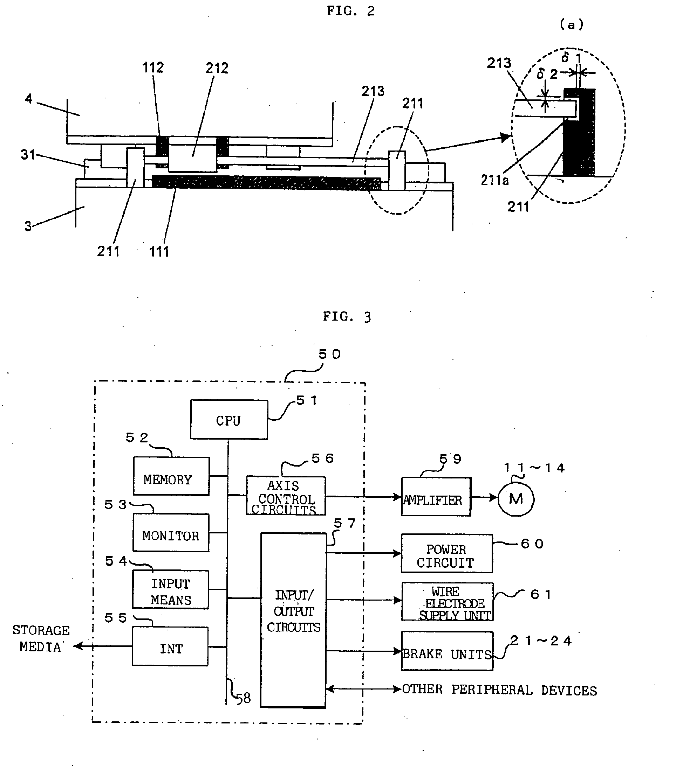

FIG. 2 is a sectional view of section A-A in FIG. 1. The structure of each brake unit will be described below by using the brake unit 21 disposed between the bed 3 and the saddle 4 as an example.

End mounts 211 of the X-axis brake unit 21 are attached to the bed 3 at both ends of the motion path of the saddle 4 and a shaft 213 is mounted between the end mounts 211 in parallel with the motion path of the saddle 4 (in the X-axis direction). FIG. 2 (a) is an enlarged view showing the mounting of the shaft 213 in an end mount 211 in detail. As is clear from the enlarged view, the shaft 213 is held by being inserted into a hole (blind hole) 211a in the end mount 211, but there is a certain amount δ1 of play between the end face of the shaft 213 and the bottom end of the hole 211a in the end mount 211 and another amount δ2 of play between the inner wall of the hole 211a and the outer surface of the shaft 213. That is, the shaft 213 is held by both end mounts 211 with play δ1 and δ2.

The X-axis brake unit 21 has a gripper 212 mounted on the saddle 4. The gripper 212 brakes the motion of the saddle 4 relative to the bed 3 by controlling the supply and interruption of compressed air to push a friction body (not shown) against the shaft 213 to grip the shaft 213. When the X-axis brake unit 21 operates and the friction body of the gripper 212 grips the shaft 213, because the shaft 213 is mounted in the end mounts 211 with play δ1 and δ2, the saddle 4, which is the X-axis movable axis, can move by a certain amount. As a result, the X-axis linear motor 11 is not completely restrained and can stop in a stable position, preventing excess current from flowing through the X-axis linear motor 11.

In the above structure, the wire 40 is supplied from the supply unit to the electric discharge machining zone, then fed into the wire box 9, a voltage is applied between the wire 40 and the workpiece 1, the X-axis linear motor 11 and the Y-axis linear motor 12 are driven according to a machining program, driving the table 5 and the workpiece 1 in the mutually orthogonal X-axis and Y-axis directions, and the workpiece 1 undergoes electric discharge machining by the wire 40. In addition, the V-axis linear motor 13 and the U-axis linear motor 14 are driven, moving the UV table 8 in the mutually orthogonal V-axis and U-axis directions, to slant the wire 40 so that taper working is carried out on the workpiece 1.

When the power of the wire electric discharge machine is turned off, excitation of the linear motors 11 to 14 halts. The movable axes such as the table 5 and UV table 8 are held and guided by the linear motion guides 31 to 34, but since the linear motors are unexcited, if an external force is applied to the movable axes 5 and 8, the external force is virtually unopposed, leaving the movable axes 5 and 8 free to move, posing a safety hazard. Therefore, as in the prior art, when the linear motors 11 to 14 are not excited, the brake units are operated to prevent motion of the movable axes.

In the present embodiment, even when the linear motors 11 to 14 are excited, if machining is not in progress and the movable axes are stationary, the brake units 21 to 24 are operated to prevent the linear motors 11 to 14 from being overloaded due to the action of an external force on the movable axes.

During preparations for machining, such as attachment of the workpiece 1 to the work stage 2, since the braking force of the brake units 21 to 24 is added to the position-holding force of the linear motors 11 to 14, it is possible to resist external forces greater than the position-holding force of the linear motors 11 to 14.

If the brake units were operated to lock the movable axes tightly during excitation of the linear motors 11 to 14, overcurrent might flow through the linear motors 11 to 14 as the linear motors tried to move to stable positions. Accordingly, in the present embodiment, the shaft 213 of the brake unit is held at the end mounts 211 with gaps δ1 and δ2 in order to allow a certain amount of relative motion. Since the linear motors are not completely restrained even when the brake units operate, the flow of overcurrent through the linear motors is prevented.

FIG. 3 is a block diagram showing the principal parts of a controller that controls the wire electric discharge machine in the present embodiment. The controller 50, which also operates as a numerical controller that controls the wire electric discharge machine, comprises a processor 51, and a memory 52 including ROM and RAM, a display unit 53, an input means 54 having a keyboard or the like with switches or the like for input of manual feed commands and the like, an interface 55 through which a machining program or the like is input to or output from external storage media, axis control circuits 56, input/output circuits 57, that are connected to the processor 51 via a bus 58.

The axis control circuits 56 for individual axes control the linear motors 11 and 12 that drive the table 5 on which the workpiece 1 is placed in the mutually orthogonal X-axis and Y-axis directions, controls the linear motors 13 and 14 that move the UV table 8 in the mutually orthogonal V-axis and U-axis directions, and has feedback control means for feedback control of the position, speed, and current of each linear motor. The linear motors 11 to 14 are connected to the axis control circuits 56 via respective amplifiers 59. The linear motors have position/speed detectors (not shown in FIG. 3) that feed back detected position and speed information to the axis control circuits. In FIG. 3, only one amplifier and linear motor are shown, while the others are not shown.

The input/output circuits 57 are connected to the brake units 21 to 24, a wire electrode supply unit 61 that supplies the wire 40, a power supply circuit 60 that applies voltage between the wire 40 of the wire electric discharge machine and the workpiece 1 to cause discharge, and other peripheral devices, switches, or sensors.

The structure of the above controller 50 for a wire electric discharge machine is substantially the same as the structure of conventional controllers for wire electric discharge machines, with the brake units 21 to 24 connected to the input/output circuits 57.

In the controller 50, the processor 51 drives the power circuit 60 via the input/output circuitry 57 according to a machining program in order to apply voltage between the wire 40 and the workpiece 1, drives the wire electrode supply unit 61 to feed the wire, issues motion commands for the linear motors to the axis control circuits 56 to control the positions, speeds, and currents of the linear motors, and thereby performs electric discharge machining of the workpiece 1. The above operations are the same as in known wire electric discharge machines.

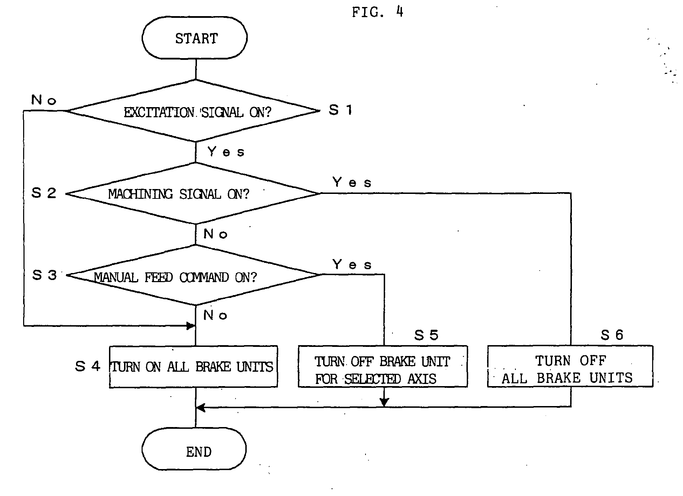

The present embodiment has additional features regarding control of the brake units 21 to 24. The control process for the brake units 21 to 24 will be described with reference to the flowchart in FIG. 4.

The processor 51 determines whether an excitation signal that excites the linear motors 11 to 14 is on or off (step S1). If the excitation signal is off, indicating that the linear motors 11 to 14 are not operable and hence that the wire electric discharge machine is not operable, then the process proceeds to step S4, all brake units 21 to 24 are turned on, the movable axes are locked, and the current processing cycle ends. In this state, the brake unit 21 operates to lock the saddle 4 in order to prevent it from moving relative to the bed 3, the brake unit 22 operates to lock the table 5 in order to prevent it from moving relative to the saddle 4, the brake unit 23 operates to lock the UV saddle 7 in order to prevent it from moving relative to the column 6, and the brake unit 24 operate to lock the UV table 8 in order to prevent it from moving relative to the UV saddle 7.

When the excitation signal is on in step S1, on the other hand, the processor 51 determines whether a machining signal, which indicates that the wire electric discharge machine is operating, is on or off (step S2), and determines whether a manual feed command such as a jog feed command or step feed command is on or off (step S3) . When the machining signal is off and the manual feed command is off, the processor 51 operates the brake units 21 to 24 (step S4) to lock the movable axes (saddle 4, table 5, UV saddle 7, and UV table 8) as described above. In this case, the linear motors 11 to 14 are excited, but the movable axes are locked. Therefore, even if an external force is applied to the movable axes, the linear motors that drive the movable axes are not overloaded. As described above, the shafts 213 of the brake units 21 to 24 are held with play in the end mounts 211, so the permanent magnets 111 and electromagnets 112 of the linear motors 11 to 14 can halt in stable positions and hold the movable axes (saddle 4, table 5, UV saddle 7, and UV table 8) without excessive current flow in the linear motors 11 to 14.

During machining, when the machining signal that indicates that machining is in progress is on (step S2), the processor 51 turns off the brake units 21 to 24 to release the brakes so that the movable axes can move (step S6) . Even when machining is not in progress and the machining signal is off, if a movable axis is moved by manual feed control (step S3), the processor 51 releases the brake applied by the relevant brake unit (step S5). That is, when the operator selects, via the input means 54, a manual feed axis with an axis selection switch and turns on a manual feed command such as a jog feed command or step feed command using a jog feed switch or step feed switch (step S3), one of the brake units 21 to 24 for selected axis is turned off to release the brake of the selected axis, thereby allowing one of the movable axes (saddle 4, table 5, UV saddle 7, or UV table 8) to move, while the brake units for other movable axes are kept on to hold those axes stationary (step S5).

For example, when the X-axis is selected and the jog feed switch is operated, the X-axis brake unit 21 is turned off and its brake is released, allowing the saddle 4 to move freely with respect to the bed 3, with the result that the linear motor 11 is driven by operation of the jog feed switch, and the saddle 4 and table 5 move in the X-axis direction. At this time, the brake units for the other movable axes are kept on, locking those movable axes so that they do not move even if an unintended force is applied.

Alternatively, since tasks such as placement of the workpiece 1 on the work stage 2 are seldom performed during movement of one or more axes, the braking apparatuses for all axes may be turned off when the jog feed switch, for example, is operated.

The above embodiment describes an example in which the present invention is applied to a wire electric discharge machine, but the present invention is applicable to any machine tool other than wire electric discharge machines that have a movable axis driven by a linear motor.

## Claims

1. A machine tool having a linear motor for driving a movable axis and a brake unit for braking the movable axis, wherein
said brake unit operates when the linear motor is excited, machining is not in progress, and the movable axis is stationary because no operation command is issued for the movable axis.

2. The machine tool of claim 1, wherein the brake unit is installed with play so that the movable axis remains movable by a certain amount even when the movable axis is braked.

3. The machine tool of claim 2, wherein the brake unit operates by pushing a friction body against a shaft installed in parallel with the movable axis, the brake unit including end mounts that hold respective ends of the shaft with a certain amount of play.

4. The machine tool of any one of claims 1 to 3, wherein the machine tool is a wire electric discharge machine.

5. A machine tool having a movable axis driven by a linear motor, the machine tool comprising:
a brake unit for braking the movable axis;
a linear motor excitation determination means for determining whether an excitation signal for exciting the linear motor is on or off;
a machining execution determination means for determining whether the linear motor is being driven to cause the machine tool to perform machining; and
a movable axis stationary state determination means for determining whether or not a feed command is issued for the movable axis of the machine tool,
wherein, when the linear motor excitation determination means determines that the excitation signal is off, the brake unit is allowed to operate to lock the movable axis, and
when the linear motor excitation determination means determines that the excitation signal is on, on the other hand, if the machining execution determination means determines that machining is not currently being performed and if the movable axis stationary state determination means determines that no feed command is issued for the movable axis, the brake unit is also allowed to operate to lock the movable axis.
